# EUROPEAN PATENT APPLICATION

(11) **EP 4 249 205 A1**
(43) Date of publication of application: **27.09.2023**
(21) Application number: 22165686.1
(22) Date of filing: 30.03.2022
(51) Int. Cl.: B29C 45/76, B29C 45/78

(54) **PREDICTIVE MONITORING SYSTEM FOR AN INJECTION MOLD**

(30) Priority: 23.03.2022 PT 2022117872
(71) Applicant: DRT Rapid - Protótipos e Moldes Lda, 2415-314 Leiria (PT)
(72) Inventor: PAULO DUARTE, Valdemar, Manuel, 2415-314 Leiria (PT)
(74) Representative: do Nascimento Gomes, Rui

(57) **Abstract**

The present application relates to a predictive monitoring system for injection molds (1), that performs an analysis of operating parameters associated with components of an injection mold (5), in particular the vibration parameter, to identify components that are not working properly and need to be replaced. The system comprises a sensory unit (2), to collect sensory data related to at least one operating parameter associated with at least one mold component, a computational unit (3) configured to compare the sensory data collected by the sensory unit with standard sensory data concerning the respective at least one operating parameter of the at least one mold component and an alarm unit (4) configured to emit an alarm signal to an operator (7) when the result of the comparison carried out in the computational unit (3), in relation to at least one operating parameter of at least one component of the mold, is outside a pre-defined operating range.

## Description

### FIELD OF THE INVENTION

The present application is enclosed in the field of injection molds. More particularly, the present application relates to monitoring systems for injection molds.

### PRIOR ART

An injection mold is comprised of mold components, that is, elements related to the mold itself, such as guides, bushings, extractors, slide bars and gears, for example, or to the product produced by it, such as the piece to be extracted of the molding zone. A typical injection mold monitoring system uses pressure sensors, temperature sensors, force sensors or cycle counters to monitor operating parameters associated with mold components, as a way of implementing preventive and corrective maintenance.

These sensors are invasive and require housing close to the molding zone. As they are invasive, the mold design time is increased and, in the case of a very complex pieces, this increase can be significant. Furthermore, operating parameters that are typically evaluated in state-of-the-art systems are found to be ineffective or insufficient to identify critical mold components and prevent costly repairs through predictive maintenance.

The present solution intended to innovatively overcome such issues.

### PROBLEM TO BE SOLVED

It is therefore necessary to develop a predictive monitoring system for injection molds, which allows to increase the longevity of the mold and avoid production downtime. Indeed, a major problem in the mold industry is the downtime that an injection module, comprised by an injection mold and an injection machine, is subject to due to anomalies that arise and are not timely detected.

This problem is solved through the system described in the present application, which allows continuous monitoring of operating parameters associated with the mold in production and the creation of an associated alarm, to predictively identify the mold components that require intervention by an operator.

### SUMMARY OF THE INVENTION

It is the purpose of the present application to provide a predictive monitoring system for injection molds when they are in use.

This is implemented through an analysis of operating parameters associated with components of an injection mold, in particular the vibration parameter, to identify components that are not working properly and need to be replaced or repaired.

As injection molds consist of several mold components, which interact mechanically with each other, these interactions always present some type of vibration (for example, caused by slips or collisions, among other actions), which can be identified through their frequency and amplitude. Analysis of the changing frequencies and amplitudes of these vibrations over time can be used to identify mold components that are not working properly and need to be replaced or repaired.

In addition to the vibration analysis performed through vibration sensors, the system is designed to additionally obtain a temperature distribution of the piece produced by the mold, through, for example, thermography techniques, and in this way the predictive maintenance is implemented through of vibration sensors and simultaneously analyzing, through thermography, the temperature of the injected piece.

These two analyses, when combined, provide the system with very valuable information about the functioning of the mold: on the one hand, there is knowledge of how the mold behaves structurally, that is, if it lacks lubrication or if all the components slide correctly, for example; on the other hand, it is possible to guarantee the quality of the cooling of the pieces immediately after their extraction, and to adjust some injection/cooling parameters in the injection machine before applying, if necessary, corrective measures to the mold. Another advantage of this combination is that both the vibratory analysis and the thermal analysis are performed using non-invasive equipment, allowing the timely prediction/correction of anomalies identified in the injection and molding process, without interfering with the mold design or with the operation of the injection machine.

The system object of the present application also comprises an alarm unit, which will warn the mold operator that it needs maintenance (for example, in the event of a sudden vibration, such as an extractor or other type of broken component). This alarm signal can also be used to automate an automatic stop of the injection machine when it is working autonomously.

### DESCRIPTION OF FIGURES

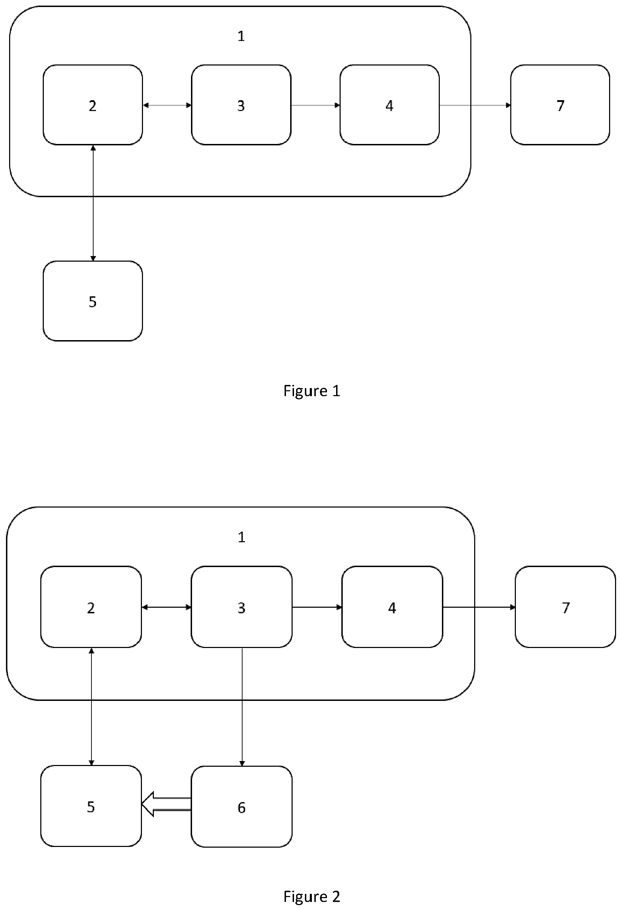

Figure 1 - representation of an embodiment of the predictive monitoring system for an injection mold, wherein the reference signs represent:
   1 - Predictive monitoring system for an injection mold;
   2 - Sensory unit;
   3 - Computational unit;
   4 - Alarm unit;
   5 - Injection mold;
   7 - Operator.
Figure 2 - representation of an embodiment of the injection system also subject of the present application. The injection system comprising the predictive monitoring system for an injection mold described in the present application and illustrated in Figure 1, wherein the reference signs represent:
   1 - Predictive monitoring system for an injection mold;
   2 - Sensory unit;
   3 - Computational unit;
   4 - Alarm unit;
   5 - Injection mold;
   6 - Injection machine;
   7 - Operator.

### DETAILED DESCRIPTION

The more general and advantageous configurations of the present invention are described in the Summary of the invention. Such configurations are detailed below in accordance with other advantageous and/or preferred embodiments of implementation of the present invention.

The object of the present application is a predictive monitoring system for an injection mold (1), aimed at monitoring operating parameters associated with components of an injection mold (5), in particular the vibration parameter, to identify components that are not working properly and need to be replaced or repaired. In fact, injection molds (5) are made up of mold components, which can either have a mechanical function or be non-static components. They interact with each other mechanically always producing some type of vibration, which is identifiable through its frequency and amplitude. An analysis of the changing frequencies and amplitudes of these vibrations over time can be used to identify mold components that are not working properly and need to be replaced or repaired. To this end, vibration sensors are used to carry out vibration studies on an injection mold (5), which are the main component of the predictive maintenance that the system (1) of the present application aims to achieve, by being able to identify critical components and prevent costly repairs. There are several types of vibration sensors that can be used, such as acceleration, velocity or displacement sensors.

The monitoring system (1) described in the present disclosure adds to the state of the art the empirical knowledge of mold components such as guides, bushings, slide bars, extractors, among other mold components, allowing the creation of a "catalog" with the various components of a mold, their vibration frequencies indicative of correct operation and possible indication of anomalies. Based on these sensory data, and through the analysis and treatment of this data, it will be possible to identify specific anomalies, such as lack of lubrication, broken parts, wear due to friction, obstacles to the correct sliding between two parts such as dust, among others.

For such predictive analysis to be possible, it is necessary to know the various components of a mold and the behavior of each one over time, that is, for example, what are their "initial" natural vibrations and how do these vibrations are changed over time or new frequencies appear, introduced by small failures linked to fatigue and/or wear. To this end, an initial calibration step is carried out during the first operating cycles of an injection machine (6), for example during the first 10 operating cycles.

According to the system (1) of the present application, another complementary way of verifying/monitoring the correct functioning of an injection mold is carried out through thermographic cameras, which allow obtaining the temperature distribution of a piece after its extraction from the mold. Specifically, after the end of an injection cycle, the piece is removed from the mold (5), for example with the aid of a robotic arm, which can be programmed to hold the part and in front of a thermographic camera, which can record the temperature distribution for future analysis. This technology makes it possible to know if there is a "hotspot" in the piece, that is, a zone that is hotter than the rest of the piece. These "hotspots" can be caused by poor cooling in a certain area of the mold (5).

In a second object of the present application, an injection system is described comprising an injection module comprised by an injection mold (5) and by an injection machine (6), and a predictive monitoring system (1) as described in the first object of the application. This system makes it possible to automate the operation of the mold (5) and of the injection machine (6), guaranteeing the execution of a predictive monitoring capable of acting directly on the operating cycles of the injection machine (6).

In a third object of the present disclosure, a method of operating the injection system is described. Said method comprises three steps that relate to i.) the step of calibrating the operating parameters that will be the target of predictive monitoring, ii.) the step of monitoring these parameters, and iii.) the step of acting on the operating cycle of the injection machine (6) and creation of the associated alarms in case any operating parameter associated with a mold component indicates the existence of an anomaly.

Considering a specific practical scenario, the operating parameters associated with mold components are vibration, for mold components such as guides and bushings, extractors, gears or other mechanisms existing in the mold (5), and temperature, considering the piece produced by the mold (5). The calibration step is carried out after installing the vibration sensors in the mold (5), which are intended to collect vibration values associated with said mold components. The calibration step makes it possible to create a record of the "normal" operating frequencies for each mold component, that is, frequencies that do not indicate the existence of anomalies in that mold component. In the monitoring stage, operating parameters are collected continuously, associated with the various components of the mold (5). At the end of a predetermined number of injection cycles, the operation of the injection machine (6) may be interrupted, so that the mold (5) can be opened to examine the temperature distribution in the piece. For this purpose, a robotic arm can be programmed to grab the piece and position it in front of the thermographic camera where it will remain for a few moments, for example one second, to obtain a photograph of it for future analysis. The monitoring step also includes the analysis of the collected operating parameters, to identify those whose values are outside the pre-defined operating range. This analysis presupposes a processing step of the sensory data collected by the vibration sensors. In a particular case, considering that the vibration sensors are of the accelerometer type, when accelerations are detected in the material with which the sensors are in contact, a function of the detected acceleration is generated as a function of time. For example, a Fourier Transform (FFT - Fast Fourier Transform) is applied to the detected signal (function in time), transforming it into a function with the distribution of frequencies in a certain time interval. For example, if the sampling frequency for the Fourier Transform is 1 Hz, the result will be a function that changes every second to show the distribution of frequencies during that second. If the frequency distribution is an indicator of the existence of an anomaly, the action step will:
- warn the operator (7) of the need for maintenance/change in some component of the mold (5), for example: need for extra lubrication, physical defects;
- warn the operator (7) of any unknown low-intensity frequency that needs further study;
- on detection of a new high-intensity frequency, it will terminate the injection machine (6) cycle immediately; these cases could be a broken extractor, broken gear or other type of shock;
- on detection of another type of atypical frequency that jeopardizes the entire operation of the mold (5), the injection machine (6) cycle will end immediately (these cases can be swarf inside a bushing, some imbalance that, if not corrected at the time, could in the near future cause a component to break).

Additionally, an alarm is also created for the analysis of the part when "hotspots" are detected, and for the operator to be warned that there is a problem with the cooling of the mold. The limit value for the notification will depend on the material used and the geometry of the piece.

### EMBODIMENTS

In a preferred embodiment, the predictive monitoring system for an injection mold (1) of the present application is comprised of a sensory unit (2), a computational unit (3) and an alarm unit (4).

The sensory unit (2) is configured to, throughout an operation cycle of an injection machine (6), collect sensory data related to at least one operating parameter associated with at least one mold component, such as guide, bushing, extractor, balance, slide bar, gear or part produced by the mold (5).

The computational unit (3) is configured to compare the sensory data collected by the sensory unit with standard sensory data concerning the respective at least one operating parameter of the at least one mold component.

The alarm unit (4) is configured to emit an alarm signal when the result of the comparison carried out in the computational unit (3), in relation to at least one operating parameter of at least one component of the mold (5), is outside a pre-defined operating range. The alarm signal may be a digital signal to be transmitted to a device associated with an operator (7) and/or may be announced audible or visually. The mechanism responsible for producing this alarm signal may be any state-of-the-art mechanism.

In the context of the present application, a predefined operating range encompasses permissible ranges of operating parameters, designated in the context of the present disclosure by standard sensory data, which indicate a proper operation of the respective mold component. These ranges can be defined according to multiple parameters, depending on the respective mold component. For example, if the mold component is an element with a mechanical function or a non-static component, the operating range will correspond to a range of vibration values that can be defined as a function of diameter, contact areas between components, sliding and/or rotation speed. On the other hand, if the mold component is a piece produced by the mold (5), the operating range will correspond to a range of temperature values that is defined as a function of the material injected by the injection machine (6) and the geometry of the piece produced by the mold (5).

In a preferred embodiment of the system, an operating parameter targeted for monitoring is vibration, and the sensory unit (2) comprises at least one sensory module configured to collect vibration frequency and amplitude sensory data associated with at least one mold component.

In another embodiment of the system, the sensory module of the sensory unit (2) comprises at least two vibration sensors, said vibration sensors being installed in the mold (5). More particularly, the sensory module comprises at least three vibration sensors wherein at least one sensor is installed on each half of the mold (5) and also on the top and/or bottom of said mold (5). These specific locations provide a direct way to collect vibrations in all directions, i.e. along the x, y and z axes. In an alternative embodiment, socket boxes are built for the sensors or holes can be made for the physical packaging of the sensors in the injection mold (5). In yet another embodiment, the vibration sensors are attached using threads on the outside of the mold (5).

In another preferred embodiment of the monitoring system (1) of the present application, a mold component is the piece produced by the injection mold (5) and an operating parameter is the temperature of that piece. In this context, the sensory unit (2) additionally comprises a temperature module configured to collect sensory data relating to a temperature distribution in the piece produced by the mold (5). For this purpose, the temperature module may comprise a thermographic camera. In one embodiment, the thermographic camera can be fixed to the injection machine (6) with the aid of a magnetic support, for example by means of magnets, and can be readjusted for each type of piece to be produced and/or injection mold (5).

In another embodiment of the system, it additionally comprises a database for storing sensory data collected by the sensory unit (2) and standard sensory data of operating parameters relating to mold components. In one embodiment of the system, the computational unit (3) comprises said database or is connected to it via a communication network, so that they can be accessed in real time.

The present application further describes a predictive monitoring system for an injection module comprised of an injection mold (5) and an injection machine (6). This system comprises the predictive monitoring system for an injection mold (1) described and in which the computational unit (3) is additionally configured to control the injection machine (6) operation, ending the injection machine cycle, if the result of the comparison carried out in the computational unit (3), in relation to at least one operating parameter of at least one mold component is outside a predefined operating range.

The present application also describes a method of operating the predictive monitoring system for an injection module described above.

The first step of the method involves the execution of a calibration step, which comprises the configuration of operating parameters of the mold components that will be monitored. This configuration may involve the identification of other types of parameters, associated with components external to the mold (5) such as injection machine fans, injection machine side doors, the spindle rotation, the materials to be injected into the mold or other external noise to the injection machine (6), so that they can be disregarded in the analysis.

In a second step of the method, a monitoring step is performed, in which sensory data relating to operating parameters associated with at least one mold component are collected and compared with respective standard sensory data. These standard sensory data may be stored in a database associated with the system.

In a third step of the method, the injection machine operating cycle is actuated and an alarm is created for each monitored operating parameter whose comparison between the respective collected and standard sensory data is outside a pre-defined operating range.

In an alternative embodiment of the method, the calibration step is performed during the first 10 operating cycles of the injection machine (6), and where an operating parameter is vibration, and the sensory data concerns the vibration frequency and amplitude.

In an alternative embodiment of the method, an operating parameter is the temperature of the piece created by the mold and where the sensory data relates to a distribution of temperatures in said piece.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Predictive monitoring system for an injection mold, comprising:
- a sensory unit configured to, throughout an operating cycle of an injection machine, collect sensory data relating to at least one operating parameter associated with at least one component of the mold;
- a computational unit configured to compare the sensory data collected by the sensory unit with standard sensory data referring to the respective at least one operating parameter of the at least one mold component;
- an alarm unit configured to issue an alarm signal when the result of the comparison performed on the computational unit, in relation to at least one operating parameter of at least one mold component, is outside a pre-defined operating range;
wherein,
an operating parameter is vibration; and the sensory unit comprises at least one sensory module configured to collect vibration frequency and amplitude sensory data.

2. System according to claim 1, wherein the sensory module of the sensory unit comprises at least two vibration sensors; said vibration sensors being installed in the mold.

3. System according to claim 2, wherein the sensory module comprises at least three vibration sensors; and wherein at least one sensor is installed on each mold half and on the top and/or bottom of the mold.

4. System according to any of the preceding claims, wherein a mold component relates to one or a plurality of the following elements: guide, bushing, extractor, slide bar, gear.

5. System according to any of the preceding claims, wherein:
a mold component is a piece produced by the mold; and an operating parameter is the temperature of said piece; the sensory unit further comprising a temperature module configured to collect sensory data relating to a temperature distribution of the piece created by the mold.

6. System according to claim 5, wherein the temperature module comprises a thermographic camera.

7. System according to claim 5 or 6, wherein the operating range is defined as a function of the material injected by the injection machine and the geometry of the piece produced by the mold.

8. System according to any of the preceding claims, wherein the operating range is defined as a function of diameter, contact areas between components, sliding and/or rotational speed.

9. System according to any of the preceding claims, further comprising a database for storing sensory data collected by the sensory unit and standard sensory data of operating parameters relating to mold components; the computational unit comprising said database or being connected thereto via a communication network.

10. An injection system comprising:
- an injection module comprising an injection mold and an injection machine;
- a predictive monitoring system for an injection mold as described in claims 1 to 9;
wherein, the computational unit of the predictive monitoring system is additionally configured to control the operation of the injection machine, ending the cycle of the injection machine, if the result of the comparison carried out in the computational unit, in relation to at least one operating parameter of at least one component of the mold, is outside a pre-defined operating range.

11. Method of operating the system described in claim 10, comprising the following steps:
i. Execution of a calibration step comprising the configuration of operating parameters of components of the mold to be monitored;
ii. Execution of a monitoring step, in which sensory data relating to operating parameters associated with a mold component are collected and compared with the respective standard sensory data;
iii. Actuation in the injection machine operating cycle and creation of an alarm for each monitored operating parameter whose comparison between the respective collected and standard sensory data is outside a pre-defined operating range.

12. Method according to claim 11, wherein the calibration step is performed during the first 10 cycles of operation of the injection machine; and wherein
a functioning parameter is vibration, and the sensory data relates to frequency and amplitude of vibration.

13. Method according to claim 11 or 12, wherein an operating parameter is the temperature of the piece produced by the mold; and wherein the sensory data relates to a temperature distribution in said piece.
